# EUROPÄISCHE PATENTSCHRIFT

(11) **EP 3 018 336 B1**
(45) Veröffentlichungstag und Bekanntmachung des Hinweises auf die Patenterteilung: **27.12.2017**
(21) Anmeldenummer: 15190114.7
(22) Anmeldetag: 16.10.2015
(51) Int. Cl.: F02M 57/00, G01L 19/14, G01L 9/08

(54) **KRAFTSTOFFINJEKTOR**
FUEL INJECTOR
INJECTEUR DE CARBURANT

(30) Priorität: 07.11.2014 DE 102014222806
(43) Veröffentlichungstag der Anmeldung: 11.05.2016
(73) Patentinhaber: ROBERT BOSCH GMBH, 70442 Stuttgart (DE)
(72) Erfinder: Rapp, Holger, 71254 Ditzingen (DE)

(56) Entgegenhaltungen:
- EP-A1- 1 335 195
- EP-A2- 0 984 258
- DE-A1-102005 053 683
- DE-A1-102010 016 424
- DE-A1-102011 102 768
- US-A1- 2010 084 856

## Beschreibung

### Stand der Technik

Die Erfindung betrifft einen Kraftstoffinjektor, insbesondere einen Common-Rail-Injektor, nach dem Oberbegriff des Anspruchs 1.

Ein Kraftstoffinjektor nach dem Oberbegriff des Anspruchs 1 ist aus der nachveröffentlichten DE 10 2014 209330 A1 der Anmelderin bekannt. Bei dem bekannten Kraftstoffinjektor wird insbesondere zur Erkennung des Zeitpunkts des Schließens der Düsennadel, bei dem diese auf ihren Sitz im Injektorgehäuse auftrifft und dadurch im Injektorgehäuse ausgebildete Einspritzöffnung zumindest mittelbar verschließt, eine Messeinrichtung mit einem Sensorelement verwendet, das im Bereich einer Versorgungsbohrung am Injektorgehäuse angeordnet ist. Die Versorgungsbohrung versorgt einen Hochdruckraum, in dem auch die Düsennadel angeordnet ist, mit unter Hochdruck stehendem Kraftstoff. Insbesondere weist das Injektorgehäuse im Bereich der Messeinrichtung einen Verformungsbereich auf, der in Abhängigkeit des Kraftstoffdrucks in der Versorgungsbohrung elastisch deformierbar ausgebildet ist. Bei einer Druckerhöhung in der Versorgungsbohrung wölbt sich der Verformungsbereich nach außen hin, was mittels des Sensorelements detektierbar ist. Das Sensorelement ist mittels einer Klebeverbindung mit dem Verformungsbereich verbunden und dazu ausgebildet, in dem Kontaktbereich zum Injektorgehäuse auftretende Dehnungen bzw. Zugspannungen zu erfassen, wobei die Größe bzw. Höhe der Dehnungen in Abhängigkeit von dem Druck in der Versorgungsbohrung ist. Charakteristisch beim angesprochenen Verschließen der Einspritzöffnungen durch die Düsennadel ist es, dass dadurch ein (relativ starker bzw. schneller) Druckanstieg in der Versorgungsleitung stattfindet, da kein Kraftstoff mehr über die Einspritzöffnungen abgegeben wird, wobei der Druckanstieg mittels des Sensorelements erfasst wird.

Während des Betriebs der Brennkraftmaschine weist diese gegenüber der Umgebungstemperatur eine erhöhte Betriebstemperatur auf, die sich über das Injektorgehäuse des Kraftstoffinjektors auch auf den Bereich der Messeinrichtung überträgt, selbst wenn die Messeinrichtung in einem relativ brennraumfernen Bereich des Kraftstoffinjektors angeordnet ist. Bei dem Kraftstoffinjektor nach dem Oberbegriff des Anspruchs 1 erfolgt das Verkleben des Sensorelements mit dem Verformungsbereich während der Fertigung des Kraftstoffinjektors bei üblichen Raumtemperaturen von beispielsweise etwa 20°C. Wird nun ein derartiger Kraftstoffinjektor in einer Brennkraftmaschine bei Betriebstemperatur betrieben, so dehnen sich der Kraftstoffinjektor im Bereich des Verformungsbereichs und das Sensorelement sowie der Klebstoff aufgrund der Wärmeausdehnungskoeffizienten der angesprochenen Elemente bereits ohne Vorhandensein eines Kraftstoffdrucks beispielsweise in der Versorgungsbohrung aus, so dass über die Klebeverbindung in dem Sensorelement Dehnungen bzw. Zugspannungen erzeugt werden, obwohl der Verformungsbereich des Kraftstoffinjektors noch keiner Deformation bzw. Verformung aufgrund des Kraftstoffdrucks unterworfen ist. Diese Spannungen wirken sich im Idealfall auf das Sensorsignal im Betrieb nicht aus, oder aber deren Auswirkungen können bei der Auswertung der Daten des Sensorelements durch einen entsprechenden Auswertealgorithmus berücksichtigt werden. Die während des Betriebs in der Klebstoffmasse auftretenden Spannungen sind jedoch relativ hoch, da sich diese sowohl aus den Spannungen hervorgerufen durch die Betriebstemperatur bzw. der Ausdehnung der Bauteile, als auch aus den Spannungen hervorgerufen durch den Kraftstoffdruck zusammensetzen. Derartige, relativ hohe Dehnungen bzw. Zugspannungen sind für die Lebensdauer der Klebeverbindung als kritisch zu bewerten. Zudem wirkt die Klebeschicht als elastisches Verbindungselement zwischen dem Haltekörper und dem Sensorelement, wodurch das Sensorsignal reduziert wird. Dies rührt daher, dass die Dehnungen im Haltekörper nicht vollständig auf das Sensorelement übertragen werden, sondern durch die Scherdehnung in der Klebeschicht reduziert werden.

Aus der DE 10 2005 053 683 A1 ist eine Messvorrichtung für einen Kraftstoffinjektor bekannt, bei der der Druck im Injektor über die Verformung des Injektorkörpers gemessen wird. Aus der DE 10 2011 102 768 A1 ist weiterhin eine Drucksensoreinrichtung für eine Druckspeichereinrichtung bekannt.

### Offenbarung der Erfindung

Ausgehend von dem dargestellten Stand der Technik liegt der Erfindung die Aufgabe zugrunde, eine insbesondere über die Lebens- bzw. Betriebsdauer des Kraftstoffinjektors haltbare und zuverlässige Verbindung zwischen dem Injektorgehäuse und dem Sensorelement ohne Verwendung von Klebstoff auszubilden.

Diese Aufgabe wird erfindungsgemäß bei einem Kraftstoffinjektor, insbesondere einem Common-Rail-Injektor, mit den kennzeichnenden Merkmalen des Anspruchs 1 dadurch gelöst, dass das Sensorelement mit dem Verformungsbereich durch eine als Ultraschallschweißverbindung ausgeführte Reibschweißverbindung verbunden ist. Eine derartige Reibschweißverbindung zeichnet sich dadurch aus, dass durch Ausübung von Druck und gleichzeitiger Relativbewegung zwischen den Fügepartnern in der Fügeebene diese erwärmt und verschweißt werden. Dadurch wird kein Hilfsstoff wie Klebstoff benötigt, um die Verbindung zwischen dem Sensorelement und dem Verformungsbereich herzustellen. Zwar sind derartige Reibschweißverbindungen insbesondere als sogenannte Bondverbindungen aus dem Elektronikbereich an sich bekannt, dabei werden jedoch insbesondere relativ einfache Drahtelemente mit entsprechenden Fügeflächen verbunden, und nicht Bauteile, die funktionale Elemente wie Elektroden o.ä. Teile aufweisen.

Vorteilhafte Weiterbildungen des erfindungsgemäßen Kraftstoffinjektors sind in den Unteransprüchen aufgeführt.

In bevorzugter Weiterbildung der Erfindung ist es vorgesehen, dass das Sensorelement zwei Elektroden aufweist, und dass eine der Elektroden, vorzugsweise die als Kathode wirkende Elektrode, mit dem Verformungsbereich verbunden ist. Dadurch wird der Vorteil erzielt, dass nicht nur eine mechanische Verbindung zwischen dem Sensorelement und dem Injektorgehäuse hergestellt wird, sondern gleichzeitig auch eine elektrisch erforderliche Verbindung ohne zusätzliche Hilfselemente oder ähnliche Bauteile.

Zur Ausbildung einer besonders zuverlässigen bzw. haltbaren Verbindung ist es darüber hinaus bevorzugt vorgesehen, dass der Verformungsbereich und das Sensorelement im Bereich der Reibschweißverbindung jeweils eben ausgebildet sind. Dadurch werden die Fügeflächen maximiert.

Eine zusätzliche Verbesserung der Verbindung zwischen dem Sensorelement und dem Verformungsbereich lässt sich erzielen, wenn der Verformungsbereich und/oder das Sensorelement zumindest im Bereich der Verbindung mit einer Beschichtung versehen sind/ist. Eine derartige Ausbildung ermöglicht es darüber hinaus, hinsichtlich ihrer Materialen bzw. Oberflächenbeschaffenheiten an sich übliche Injektorgehäuse bzw. Sensorelemente zu verwenden.

In einer ersten Weiterbildung des zuletzt genannten Vorschlags ist es vorgesehen, dass die Beschichtung als Kupferschicht oder Silberschicht an dem Verformungsbereich ausgebildet ist. Eine weitere, alternative oder zusätzliche Weiterbildung sieht vor, dass die Beschichtung Gold aufweist bzw. als Goldschicht an dem Sensorelement ausgebildet ist.

Die soweit beschriebene Reibschweißverbindung eignet sich besonders bei Sensorelementen, welche als Piezoelement ausgebildet sind. Derartige Piezoelemente weisen insbesondere relativ großflächige Verbindungsflächen auf, so dass sich eine zuverlässige und haltbare Verbindung des Piezoelements zum Verformungsbereich herstellen lässt.

Besonders bevorzugt ist die Anordnung des Verformungsbereichs im Bereich der Versorgungsbohrung oder eines mit der Versorgungsbohrung in Wirkverbindung angeordneten Abzweigs. Dies hat den Vorteil, dass die Verbindungsstelle zwischen dem Verformungsbereich und dem Sensorelement in einem relativ brennraumfernen Bereich angeordnet werden kann. In dem insbesondere während des Betriebs der Brennkraftmaschine geringere Temperaturen herrschen als in einem relativ brennraumnahen Bereich des Injektorgehäuses. Dadurch wird insbesondere auch die Verbindung zwischen den angesprochenen Bauteilen thermisch relativ wenig beansprucht. Bei Verwendung eines Abzweigs wird darüber hinaus der besondere Vorteil erzielt, dass trotz der brennraumfernen Anordnung des Sensorelements dieses an nahezu beliebigem Ort in Umfangsrichtung des Injektorgehäuses angeordnet werden kann.

Bevorzugt ist darüber hinaus eine konstruktive Ausbildung des Verformungsbereichs im Bereich einer sacklochförmigen Vertiefung oder einer Abflachung des Injektorgehäuses. Beide Varianten lassen sich herstellungstechnisch besonders einfach und genau herstellen und ermöglichen darüber hinaus auf relativ einfache Art und Weise die Ausbildung einer ebenen Fläche zur Anbindung des Sensorelements.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte, teilweise geschnittene Seitenansicht eines erfindungsgemäßen Kraftstoffinjektors,
- Fig. 2: eine Draufsicht auf den Kraftstoffinjektor im Bereich eines Sensorelements und
- Fig. 3: einen Schnitt in der Ebene III - III der Fig. 2.

Gleiche Elemente bzw. Elemente mit gleicher Funktion sind in den Figuren mit den gleichen Bezugsziffern versehen.

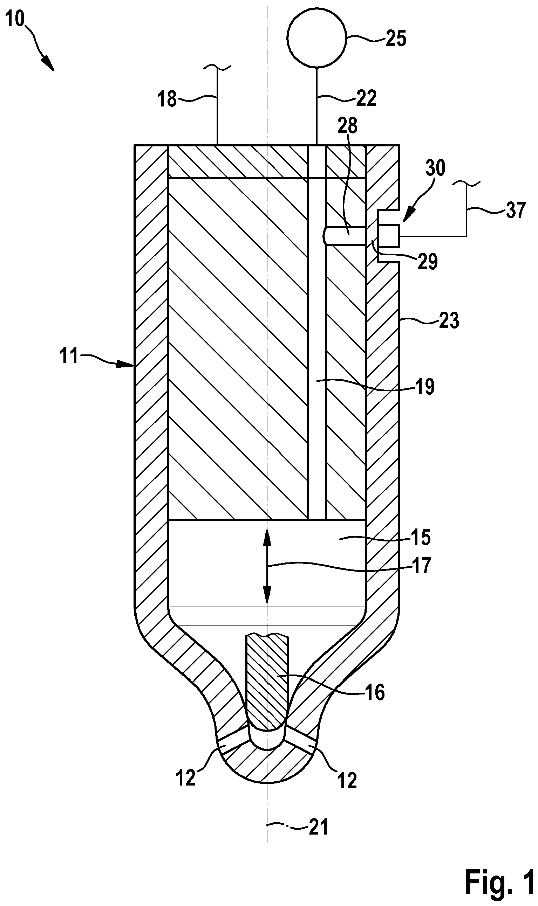

Der in der Fig. 1 stark vereinfacht dargestellte Kraftstoffinjektor 10 ist als sogenannter Common-Rail-Injektor ausgebildet, und dient dem Einspritzen von Kraftstoff in den nicht gezeigten Brennraum einer Brennkraftmaschine, insbesondere einer selbstzündenden Brennkraftmaschine.

Der Kraftstoffinjektor 10 weist ein im Wesentlichen aus Metall bestehendes, ggf. mehrteilig ausgebildetes Injektorgehäuse 11 auf, in dem auf der dem Brennraum der Brennkraftmaschine zugewandten Seite wenigstens eine, vorzugsweise mehrere Einspritzöffnungen 12 zum Einspritzen des Kraftstoffs angeordnet sind. Innerhalb des Injektorgehäuses 11 bildet dieses einen Hochruckraum 15 aus, in dem eine als Einspritzglied dienende Düsennadel 16 in Richtung des Doppelpfeils 17 hubbeweglich angeordnet ist. In der dargestellten, abgesenkten Stellung der Düsennadel 16 bildet diese zusammen mit der Innenwand des Hochdruckraums 15 bzw. des Injektorgehäuses 11 einen Dichtsitz aus, so dass die Einspritzöffnungen 12 zumindest mittelbar verschlossen sind, derart, dass das Einspritzen von Kraftstoff aus dem Hochdruckraum 15 in den Brennraum der Brennkraftmaschine vermieden wird. In der anderen, nicht dargestellten, von dem Dichtsitz abgehobenen Position der Düsennadel 16 gibt diese die Einspritzöffnungen 12 zum Einspritzen des Kraftstoffs in den Brennraum der Brennkraftmaschine frei. Die Bewegung der Düsennadel 16, insbesondere zum Freigeben der Einspritzöffnungen 12, erfolgt auf eine an sich bekannte Art und Weise mittels eines nicht dargestellten Aktuators, der über eine Spannungsversorgungsleitung 18 von einer Steuereinrichtung der Brennkraftmaschine ansteuerbar ist. Bei dem Aktuator kann es sich insbesondere um einen Magnetaktuator oder aber um einen Piezoaktuator handeln.

Die Versorgung des Hochdruckraums 15 mit unter Hochdruck (Systemdruck) stehendem Kraftstoff erfolgt über eine innerhalb des Injektorgehäuses 11 angeordnete bzw. in Bauteilen des Kraftstoffinjektors 10 ausgebildete Versorgungsbohrung 19, die insbesondere exzentrisch zur Längsachse 21 des Injektorgehäuses 11 in einem Randbereich des Kraftstoffinjektors 10, zumindest im Wesentlichen parallel zur Längsachse 21, verläuft. Die Versorgungsbohrung 19 ist darüber hinaus über einen nicht dargestellten Kraftstoffanschlussstutzen mit einer Kraftstoffleitung 22 verbunden, welche wiederum mit einem Kraftstoffspeicher 25 (Rail) gekoppelt ist.

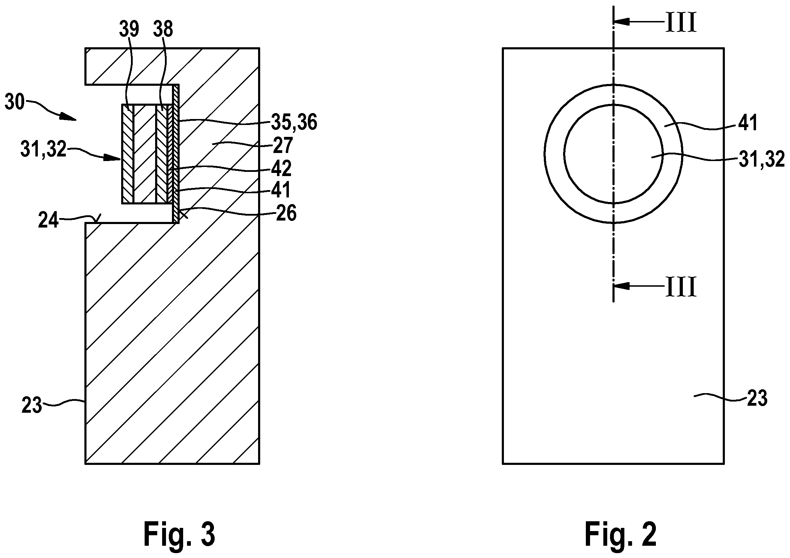

In einem von den Einspritzöffnungen 12 bzw. dem Brennraum axial relativ weit beabstandeten Bereich des Injektorgehäuses 11 ist in dessen Außenwand 23 beispielhaft eine sacklochförmige Vertiefung 24 ausgebildet (Fig. 3), so dass die Wanddicke des Injektorgehäuses 11 im Bereich der Vertiefung 24 reduziert ist. Ergänzend wird erwähnt, dass anstelle einer sacklochförmigen Vertiefung 24 das Injektorgehäuse 11 auch eine Abflachung aufweisen kann, in deren Bereich die Wanddicke des Injektorgehäuses 11 reduziert ist.

Der ebene ausgebildete Grund 26 der Vertiefung 24 bildet einen Teil eines Verformungsbereichs 27 aus. Auf der der Vertiefung 24 abgewandten Seite des Injektorgehäuses 11 ist das Injektorgehäuse 11 beispielhaft in Wirkverbindung mit einem Abzweig 28 angeordnet, der wiederum in der Versorgungsbohrung 19 mündet. Dadurch wirkt der in der Versorgungsbohrung 19 augenblicklich herrschende Kraftstoffdruck auch in dem Injektorgehäuse 11 auf der der Vertiefung 24 abgewandten Seite. Dadurch, dass die Wanddicke des Injektorgehäuses 11 im Bereich der Vertiefung 24 reduziert ist, wirkt der Wandabschnitt 29 des Injektorgehäuses 11 auf der der Vertiefung 24 zugewandten Seite als Verformungsbereich 27 in Art einer elastisch verformbaren Membran, wobei die Verformung, welche sich als Wölbung ausbildet, umso größer ist, je höher der augenblickliche Kraftstoffdruck in der Versorgungsbohrung 19 bzw. dem Abzweig 28 ist.

Zur Detektion des zeitlichen Verlaufs des Kraftstoffdrucks in dem Abzweig 28 bzw. in der Versorgungsbohrung 19 und damit auch in dem Hochdruckraum 15, welcher als Indiz für die augenblickliche Stellung der Düsennadel 16 zur Ansteuerung der Düsennadel 16 verwendet wird, weist der Kraftstoffinjektor 10 eine Messeinrichtung 30 auf. Die Messeinrichtung 30 umfasst ein beispielhaft als Piezoelement 31 ausgebildetes Sensorelement 32.

Erfindungsgemäß ist es vorgesehen, dass das Sensorelement 32 bzw. das Piezoelement 31 mit dem Verformungsbereich 27 über eine Reibschweißverbindung 35 verbunden ist. Insbesondere ist die Reibschweißverbindung 35 als Ultraschallschweißverbindung 36 ausgebildet. Das Sensorelement 32 bzw. das Piezoelement 31, welches im Querschnitt zumindest im Wesentlichen kreisförmig bzw. rund ausgebildet ist, weist auf gegenüberliegenden Stirnseiten zwei Elektroden 38, 39 auf, wobei die eine Elektrode 38, als Kathode und die andere Elektrode 39 als Anode wirkt. Die Anordnung des Piezoelements 31 am Verformungsbereich 27 ist derart, dass die eine, als Kathode wirkende Elektrode 38 unmittelbar an dem Verformungsbereich 27 anliegend angeordnet ist. Zum Ausbilden der Reibschweißverbindung 35 bzw. der Ultraschallschweißverbindung 36 drückt ein geeignetes Werkzeug das Sensorelement 32 bzw. das Piezoelement 31 mit einer entsprechenden, insbesondere senkrecht zum Verformungsbereich 27 ausgerichteten Kraft gegen den Verformungsbereich 27 und führt gleichzeitig eine horizontale, hochfrequente (Frequenz im Bereich von Ultraschall) Bewegung aus. Dadurch werden die beiden Fügepartner miteinander verbunden.

Zur Verbesserung der Verbindung zwischen dem Verformungsbereich 27 und dem Piezoelement 31 kann es vorgesehen sein, dass der Verformungsbereich 27 mit einer Beschichtung 41, vorzugsweise mit einer Kupferschicht oder einer Silberschicht, versehen ist. Darüber hinaus kann es alternativ oder zusätzlich vorgesehen sein, dass das Piezoelement 31, zumindest auf der dem Verformungsbereich 27 zugewandten Seite, ebenfalls mit einer Beschichtung 42, vorzugsweise aus Gold bestehend, versehen ist.

Der soweit beschriebene Kraftstoffinjektor 10 kann in vielfältiger Art und Weise abgewandelt bzw. modifiziert werden, ohne vom Erfindungsgedanken abzuweichen.

## Patentansprüche

1. Kraftstoffinjektor (10), insbesondere Common-Rail-Injektor, mit einem Injektorgehäuse (11), in dem ein Hochdruckraum (15) ausgebildet ist, der über eine im Injektorgehäuse (11) angeordnete Versorgungsbohrung (19) mit unter Druck stehendem Kraftstoff versorgbar ist, mit wenigstens einer zumindest mittelbar mit dem Hochdruckraum (15) verbundenen, im Injektorgehäuse (11) ausgebildeten Einspritzöffnung (12) zum Einspritzen von Kraftstoff in den Brennraum einer Brennkraftmaschine, mit einem die wenigstens eine Einspritzöffnung (12) freigebenden oder verschließenden Einspritzglied (16), und mit einer Messeinrichtung (30) zur zumindest mittelbaren Erfassung des Drucks im Hochdruckraum (15) oder der Versorgungsbohrung (19), wobei die Messeinrichtung (30) dazu ausgebildet ist, eine elastische Verformung eines zumindest mittelbar mit der Versorgungsbohrung (19) oder dem Hochdruckraum (15) in Wirkverbindung angeordneten Verformungsbereichs (27) zu erfassen, und wobei die Messeinrichtung (30) ein Sensorelement (32) aufweist, das mit dem Verformungsbereich (27) zumindest mittelbar verbunden ist,
**dadurch gekennzeichnet,**
**dass** das Sensorelement (32) mit dem Verformungsbereich (27) durch eine als Ultraschallschweißverbindung (36) ausgebildete Reibschweißverbindung (35) verbunden ist.

2. Kraftstoffinjektor nach Anspruch 1,
**dadurch gekennzeichnet,**
**dass** das Sensorelement (32) zwei Elektroden (38, 39) aufweist, und dass eine der Elektroden (38), vorzugsweise die als Kathode wirkende Elektrode (38), mit dem Verformungsbereich (27) verbunden ist.

3. Kraftstoffinjektor nach einem der Ansprüche 1 oder 2,
**dadurch gekennzeichnet,**
**dass** der Verformungsbereich (27) und das Sensorelement (32) im Bereich der Reibschweißverbindung (35) jeweils eben ausgebildet sind.

4. Kraftstoffinjektor nach einem der Ansprüche 1 bis 3,
**dadurch gekennzeichnet,**
**dass** der Verformungsbereich (27) und/oder das Sensorelement (32) zumindest im Bereich der Reibschweißverbindung (35) mit einer Beschichtung (41, 42) versehen sind/ist.

5. Kraftstoffinjektor nach Anspruch 4
**dadurch gekennzeichnet,**
**dass** die Beschichtung (41) als Kupferschicht oder als Silberschicht an dem Verformungsbereich (27) ausgebildet ist.

6. Kraftstoffinjektor nach Anspruch 4 oder 5,
**dadurch gekennzeichnet,**
**dass** die Beschichtung (42) Gold aufweist und an dem Sensorelement (32) ausgebildet ist.

7. Kraftstoffinjektor nach einem der Ansprüche 1 bis 6,
**dadurch gekennzeichnet,**
**dass** das Sensorelement (32) als Piezoelement (31) ausgebildet ist.

8. Kraftstoffinjektor nach einem der Ansprüche 1 bis 7,
**dadurch gekennzeichnet,**
**dass** der Verformungsbereich (27) im Bereich der Versorgungsbohrung (19) oder eines mit der Versorgungsbohrung (19) in Wirkverbindung angeordneten Abzweigs (28) angeordnet ist.

9. Kraftstoffinjektor nach einem der Ansprüche 1 bis 8,
**dadurch gekennzeichnet,**
**dass** der Verformungsbereich (27) im Bereich einer sacklochförmigen Vertiefung (24) oder an einer Abflachung des Injektorgehäuses (11) angeordnet ist.

## Claims

1. Fuel injector (10), in particular common-rail injector, having an injector housing (11) in which there is formed a high-pressure chamber (15) which can be supplied with pressurized fuel via a supply bore (19) arranged in the injector housing (11), having at least one injection opening (12) which is connected at least indirectly to the high-pressure chamber (15) and which is formed in the injector housing (11) and which serves for the injection of fuel into the combustion chamber of an internal combustion engine, having an injection valve element (16) which opens up or closes off the at least one injection opening (12), and having a measuring device (30) for at least indirectly detecting the pressure in the high-pressure chamber (15) or in the supply bore (19), wherein the measuring device (30) is designed to detect an elastic deformation of a deformation region (27) which is arranged so as to be at least indirectly operatively connected to the supply bore (19) or to the high-pressure chamber (15), and wherein the measuring device (30) has a sensor element (32) which is at least indirectly connected to the deformation region (27),
**characterized**
**in that** the sensor element (32) is connected to the deformation region (27) by means of a friction-welded connection (35) formed as an ultrasound-welded connection (36).

2. Fuel injector according to Claim 1,
**characterized**
**in that** the sensor element (32) has two electrodes (38, 39), and in that one of the electrodes (38), preferably the electrode (38) which acts as cathode, is connected to the deformation region (27) .

3. Fuel injector according to either of Claims 1 and 2,
**characterized**
**in that** the deformation region (27) and the sensor element (32) are each of planar form in the region of the friction-welded connection (35).

4. Fuel injector according to one of Claims 1 to 3, **characterized**
**in that** the deformation region (27) and/or the sensor element (32) are/is equipped with a coating (41, 42) at least in the region of the friction-welded connection (35).

5. Fuel injector according to Claim 4,
**characterized**
**in that** the coating (41) is formed as a copper layer or as a silver layer on the deformation region (27).

6. Fuel injector according to Claim 4 or 5, **characterized in that** the coating (42) has gold and is formed on the sensor element (32).

7. Fuel injector according to one of Claims 1 to 6, **characterized**
**in that** the sensor element (32) is formed as a piezo element (31).

8. Fuel injector according to one of Claims 1 to 7, **characterized**
**in that** the deformation region (27) is arranged in the region of the supply bore (19) or of a branch (28) which is arranged so as to be operatively connected to the supply bore (19).

9. Fuel injector according to one of Claims 1 to 8, **characterized**
**in that** the deformation region (27) is arranged in the region of a blind-bore-like depression (24) or of a flattened portion of the injector housing (11) .

## Revendications

1. Injecteur de carburant (10), en particulier injecteur à rail commun, présentant
un boîtier d'injecteur (11) dans lequel est formée une chambre (15) sous haute pression qui peut être alimentée par l'intermédiaire d'un alésage d'alimentation (19) disposé dans le boîtier d'injecteur (11) en un carburant mis sous pression,
au moins une ouverture d'injection (12) reliée au moins indirectement à la chambre (15) sous haute pression et formée dans le boîtier d'injecteur (11) pour injecter du carburant dans la chambre de combustion d'un moteur à combustion interne,
un organe d'injection (16) qui libère ou ferme la ou les ouvertures d'injection (12) et
un dispositif de mesure (30) configuré pour saisir au moins indirection la pression qui règne dans la chambre (15) sous haute pression ou dans l'alésage d'alimentation (19),
le dispositif de mesure (30) étant configuré pour saisir une déformation élastique d'une partie déformable (27) interagissant au moins indirectement avec l'alésage d'alimentation (19) ou la chambre (15) sous haute pression,
le dispositif de mesure (30) présentant un élément de capteur (32) relié au moins indirectement à la partie déformable (27),
**caractérisé en ce que**
l'élément de capteur (32) est relié à la partie déformable (27) par une liaison (35) soudée par frottement et configurée comme liaison (36) soudée par ultrasons.

2. Injecteur de carburant selon la revendication 1, **caractérisé en ce que** l'élément de capteur (32) présente deux électrodes (38, 39) et **en ce que** l'une des électrodes (38), de préférence l'électrode (38) agissant comme cathode, est reliée à la partie déformable (27).

3. Injecteur de carburant selon l'une des revendications 1 ou 2, **caractérisé en ce que** la partie déformable (27) et l'élément de capteur (32) sont plans au niveau de la liaison (35) soudée par friction.

4. Injecteur de carburant selon l'une des revendications 1 à 3, **caractérisé en ce que** la partie déformable (27) et/ou l'élément de capteur (32) sont dotés d'un revêtement (41, 42) au moins au niveau de la liaison (35) soudée par frottement.

5. Injecteur de carburant selon la revendication 4, **caractérisé en ce que** le revêtement (41) est configuré comme revêtement de cuivre ou comme revêtement d'argent de la partie déformable (27).

6. Injecteur de carburant selon la revendications 4 ou 5, **caractérisé en ce que** le revêtement (42) présente de l'or et est formé sur l'élément de capteur (32).

7. Injecteur de carburant selon l'une des revendications 1 à 6, **caractérisé en ce que** l'élément de capteur (32) est configuré comme piézo-élément (31).

8. Injecteur de carburant selon l'une des revendications 1 à 7, **caractérisé en ce que** la partie déformable (27) est disposée au niveau de l'alésage d'alimentation (19) ou d'une dérivation (28) interagissant avec l'alésage d'alimentation (19).

9. Injecteur de carburant selon l'une des revendications 1 à 8, **caractérisé en ce que** la partie déformable (27) est disposée au niveau d'un creux (24) en forme de trou aveugle ou sur un aplatissement du boîtier d'injecteur (11).
